**Europäisches Patentamt**

**European Patent Office**

**Office européen des brevets**

(19)

(11) Veröffentlichungsnummer: **0 001 220**
**B1**

(12)

# EUROPÄISCHE PATENTSCHRIFT

(45) Veröffentlichungstag der Patentschrift:
**18.11.81**

(51) Int. Cl.³: **C 03 C 27/08**, B 23 K 35/00,
**B 21 K 21/00**

(21) Anmeldenummer: **78100744.8**

(22) Anmeldetag: **24.08.78**

(54) Verfahren zum mittelbaren Verbinden zweier Teile.

(30) Priorität: **23.09.77 DE 2742922**

(73) Patentinhaber: **SIEMENS AKTIENGESELLSCHAFT Berlin und München, Postfach 22 02 61, D-8000 München 22 (DE)**

(43) Veröffentlichungstag der Anmeldung:
**04.04.79 Patentblatt 79/7**

(72) Erfinder: **Burkart, Klaus, Sonthofenerstrasse 28, 8970 Immenstadt (DE)**
Erfinder: **Wintzer, Manfred, Planegger Strasse 13, D-8034 Unterpfaffenhofen (DE)**

(45) Bekanntmachung des Hinweises auf die Patenterteilung:
**18.11.81 Patentblatt 81/46**

(84) Benannte Vertragsstaaten:
**CH FR GB NL**

(56) Entgegenhaltungen:
DE-A-2 460 207
DE-A-2 749 696
DE-B-1 254 774
FR-A-1 127 182
GB-A-624 369
GB-A-977 648
GB-A-1 031 436
US-A-3 390 969
US-A-3 798 746
US-A-3 921 885

(56) Entgegenhaltungen:
US-A-3 924 792
SIEMENS FORSCHUNGS- UND
ENTWICKLUNGSBERICHTE,
Bad 4, Nr. 3,
März 1975,
Berlin (DE)
ESCHLER «Design of high-resolution
acoustooptic light deflectors»,
Seiten 174–184.

## Verfahren zum mittelbaren Verbinden zweier Teile

Die Erfindung betrifft ein Verfahren zum mittelbaren Verbinden zweier Teile durch Verschweissung zweier Metallauflagen, bei welchem die Metallauflagen im Vakuum auf die Verbindungsflächen aufgebracht und im Vakuum miteinander verschweisst werden.

Ein derartiges Verfahren ist beispielsweise aus der DE-OS 22 53 913 bekannt. Bei diesem bekannten Verfahren soll zur Herstellung einer akustischen Lichtablenkeinrichtung ein beispielsweise aus Quarz bestehendes akusto-optisches Bauelement mit einem beispielsweise als piezo-elektrischer Kristall ausgebildeten elektromechanischen Wandler verbunden werden. Hierzu werden in einer Vakuumkammer auf die Verbindungsflächen der zu verbindenden Teile zwei aufeinanderfolgende Schichten aus Gold und Chrom und aus Indium aufgedampft, wobei die aus Gold und Chrom bestehende Schicht eine Stärke von wenigen tausend Angström-Einheiten und die Indiumschicht etwa die gleiche Stärke erhält. Anschliessend werden die mit Indium überzogenen Oberflächen im Vakuum für einige Minuten mit einem Druck von etwa 2800 bis 3500 N/cm² zusammengedrückt, wobei die beiden Indiumschichten durch Verschweissen miteinander verbunden werden. Sollen auf diese Weise aus druckempfindlichen Werkstoffen bestehende Teile miteinander oder mit anderen Teilen verbunden werden, so besteht bei den relativ hohen, für die Kaltverschweissung erforderlichen Drücken die Gefahr einer Zerstörung dieser Teile. Die Gefahr derartiger Zerstörungen besteht beispielsweise bei akustooptischen Bauteilen aus Bleimolybdat oder bei elektromechanischen Wandlern aus Lithiumniobat.

Aus der FR-PS 2 162 743 ist ein weiteres Verfahren zur Herstellung akustischer Lichtablenkeinrichtungen bekannt, bei welchem ein beispielsweise aus Bleimolybdat bestehendes akustooptisches Element mittelbar mit einem beispielsweise aus Lithiumniobat bestehenden elektroakustischen Wandler verbunden werden soll. Hierzu werden auf jede der Verbindungsflächen nacheinander ca. 200 Angström starke Titanschichten, ca. 200 Angström starke Schichten aus Titan und Gold, ca. 3000 Angström starke Goldschichten und ca. 3000 Angström starke Indiumschichten in einer Vakuumkammer aufgedampft. Anschliessend werden dann die beiden insgesamt ca. 6400 Angström starken Metallauflagen im Vakuum miteinander verschweisst, wobei bei einer Temperatur von ca. 60 °C ein Druck in der Grössenordnung von 2000 n/cm² aufgebracht werden muss. Dieser Druck liegt unterhalb des für das Kaltverschweissen vorstehend genannten Bereiches von 2800 bis 3500 N/cm², da es sich im vorliegenden Fall bei Schweisstemperaturen um 60 °C um eine Art Thermokompressionsschweissen handelt. Bei den durch Erhöhung der Schweisstemperatur geringfügig herabgesetzten Drucken besteht jedoch immer noch die Gefahr einer Zerstörung der zu verbindenden Teile. Ausserdem können bei Teilen mit unterschiedlichen Wärmeausdehnungskoeffizienten nach dem Abkühlen Spannungsrisse auftreten.

In der DE-B-1 254 774 ist ein Verfahren zum mittelbaren Verbinden von zwei Flächen beschrieben, wobei auf die planpolierten Berührungsflächen der beiden Körper in einer Vakuumanlage Gold oder ein anderes Edelmetall in einer Schichtdicke von weniger als 1 μm aufgedampft und diese Schichten ohne besonderen Druck oder Wärmebehandlung aufeinandergebracht werden. Die Goldschicht gibt aber keine Haftung, sondern lässt sich ganz leicht abwischen, so dass mit diesem bekannten Verfahren keine feste Verbindung zu erzielen ist.

Der vorliegenden Erfindung liegt die Aufgabe zugrunde, ein Verfahren zum mittelbaren Verbinden zweier Teile anzugeben, bei welchem auch aus druckempfindlichen Werkstoffen bestehende Teile ohne die Gefahr einer Zerstörung fest und sicher miteinander verbunden werden können.

Diese Aufgabe wird erfindungsgemäss dadurch gelöst, dass die Verbindungsflächen der zu verbindenden Teile auf eine Ebenheit von weniger als 1 μm und eine Rauhtiefe von weniger als 0,1 μm bearbeitet werden und zweischichtige, aus einer unteren Haftschicht und einer oberen Verbindungsschicht bestehende Metallauflagen in Schichtstärken zwischen 0,5 nm und 55 nm aufgebracht werden. Diese zweischichtigen Metallauflagen können dann so gewählt werden, dass die Haftschicht eine besonders gute Haftung zu der Verbindungsfläche der Teile aufweist und dass die Verbindungsschicht zu besonders sicheren Schweissverbindungen führt. Hierbei hat es sich als besonders günstig herausgestellt, wenn die Haftschicht in einer Schichtstärke zwischen 0,5 nm und 5 nm und die Verbindungsschicht in einer Schichtstärke zwischen 5 nm und 50 nm aufgebracht wird. Bei der angegebenen Ebenheit und Rauhtiefe ergibt sich eine auch im Mikrobereich flächige Berührung der Metallauflagen und somit eine besonders sichere Schweissverbindung.

Durch die Massnahme nach der Erfindung können die Metallauflagen überraschenderweise durch blosses Inberührungbringen im Vakuum praktisch drucklos fest und sicher miteinander verschweisst werden. Dieser Effekt des Schweissens ohne merklichen Schweissdruck tritt jedoch nur in dem angegebenen Bereich der Schichtstärken der Metallauflagen auf. Bei unter 0,5 nm liegenden Schichtstärken der Metallauflagen kann keine sichere Schweissverbindung mehr erzielt werden, während bei oberhalb 55 nm liegenden Schichtstärken wieder ein unerwünscht hoher Schweissdruck aufgewandt werden muss. Neben der Einsparung an Metall wird mit Hilfe des erfindungsgemässen Verfahrens auch eine äusserst schonende Behandlung der zu verbindenden Teile erreicht, da die Verbindungsflächen praktisch nicht mechanisch beansprucht werden. Die ohne oder ohne merklichen Schweissdruck hergestellten mittelbaren Verbindungen sind nicht lösbar. Meist ist die Festigkeit der nach dem erfindungsgemässen Verfahren hergestellten mittelbaren Verbindungen höher als die Festigkeit der Grundwerkstoffe, das heisst, beim Abreissversuch liegt die Bruchstelle in dem an die Verbindungsstelle angrenzenden Bereich eines der Teile.

Aus der DE-A-24 60 207 ist es bereits bekannt, zum mittelbaren Verbinden zweier Teile zweischichtige Metallauflagen mit Schichtstärken zwischen 5,5 nm und 22 nm zu verwenden. Bei diesen bekannten mittelbaren Verbindungen werden die Metallauflagen jedoch nicht durch Schweissen, sondern durch Aufsprengen miteinander verbunden. Diese aus der Optik zur Verbindung von Glasproben bekannte Aufsprengtechnik führt zu lösbaren Verbindungen und kann somit nicht mit den nach dem erfindungsgemässen Verfahren hergestellten unlösbaren Verbindungen verglichen werden. Beim Aufsprengen müssen die Metallauflagen eine höchstmögliche Planheit und Parallelität aufweisen, so dass sie, bei guter Sauberkeit aneinandergefügt, infolge der Adhäsionskräfte fest aneinander haften. Die mit Hilfe der Aufsprengtechnik hergestellten Verbindungen bleiben auch nach längerer Zeit lösbar, das heisst die Metallauflagen verschweissen nicht miteinander. Dies ist vermutlich darauf zurückzuführen, dass das Aufsprengen manuell ausserhalb des Vakuums durchgeführt werden muss und Schweissverbindungen nur innerhalb der Vakuumkammer bei oxidfreien Oberflächen der Metallauflagen hergestellt werden können.

Nach einer Weiterbildung der Erfindung wird für die Haftschicht Titan oder Chrom in einer Schichtdicke zwischen 0,5 nm und 5 nm verwendet und für die Verbindungsschicht eines der Metalle aus der Gruppe Gold, Silber, Platin, Kupfer, Aluminium und Indium in einer Schichtstärke zwischen 5 nm und 50 nm aufgebracht. Einschichtige Metallauflagen aus Titan oder Chrom werden insbesondere dann angewendet, wenn bei der Verbindung auf eine besonders gute elektrische Leitfähigkeit oder niedrige akustische Impedanz kein Wert gelegt wird. Chrom oder Titan führt aber zu einer ausgezeichneten Haftung auf den Verbindungsflächen, während Gold, Silber, Platin, Kupfer, Aluminium und Indium eine vorzügliche Schweissbarkeit aufweisen. Je nach den gegebenen Erfordernissen können die Metalle für die Verbindungsschicht so ausgewählt werden, dass sie, wie beispielsweise Gold und Silber, eine gute elektrische Leitfähigkeit aufweisen oder, wie beispielsweise Silber, Kupfer und Aluminium zu einer besonders geringen Schallabsorption führen.

Werden die zu verbindenden Teile beim Verschweissen der Metallauflagen mit einem Druck bis zu 10 N/cm$^2$ zusammengepresst, so ergibt sich insbesondere bei dünnen elastischen Teilen eine bessere flächenhafte Berührung und somit Verschweissung der Teile. Dieser relativ geringe Druck dient hierbei dazu, Unebenheiten der zu verbindenden Flächen auszugleichen.

Vorzugsweise wird das Verschweissen der Metallauflagen bei Raumtemperatur vorgenommen. Hierdurch werden bei Teilen mit unterschiedlichen Wärmeausdehnungskoeffizienten durch das Abkühlen auftretende Spannungen ausgeschlossen.

Vorteilhaft wird auf die Verbindungsfläche mindestens eines der zu verbindenden Teile, vor dem Aufbringen der Metallauflage, im Vakuum eine maximal 100 nm starke Zwischenschicht eines bleifreien Glases aufgebracht. Diese Zwischenschicht wirkt als Diffusionssperre und verhindert somit, dass eventuell vorhandene schädliche Stoffe in die Metallauflagen diffundieren und ein Verschweissen der Metallauflagen verhindern oder erschweren. Ein derartiger schädlicher Stoff ist beispielsweise Blei, das in Bleimolybdat, Bleiglas oder in bestimmten piezokeramischen Materialien enthalten ist. Die aus bleifreiem Glas bestehende Diffusionssperrschicht verhindert andererseits auch, dass das Metall der Metallauflagen nach der Herstellung der mittelbaren Verbindung in eines oder beide der verbundenen Teile diffundiert und die Verbindung hierdurch schwächt oder löst. Die Diffusionssperrschicht führt somit zu besonders dauerhaften und sicheren mittelbaren Verbindungen.

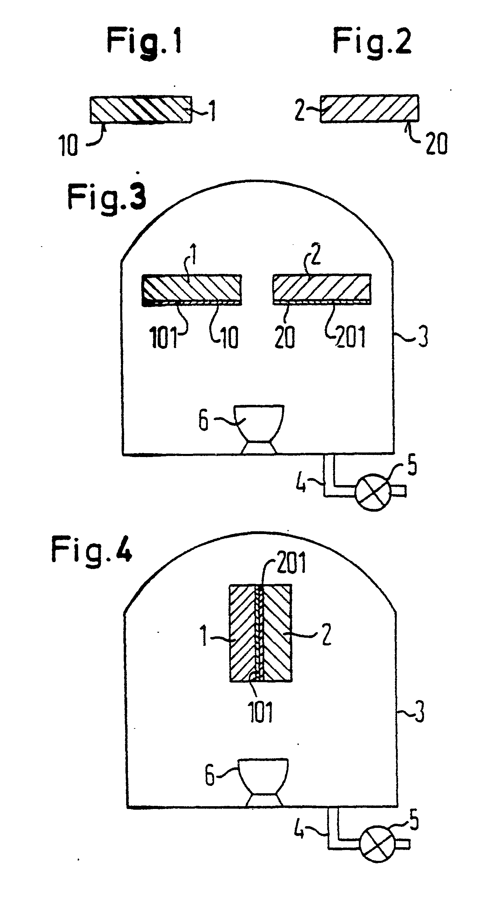

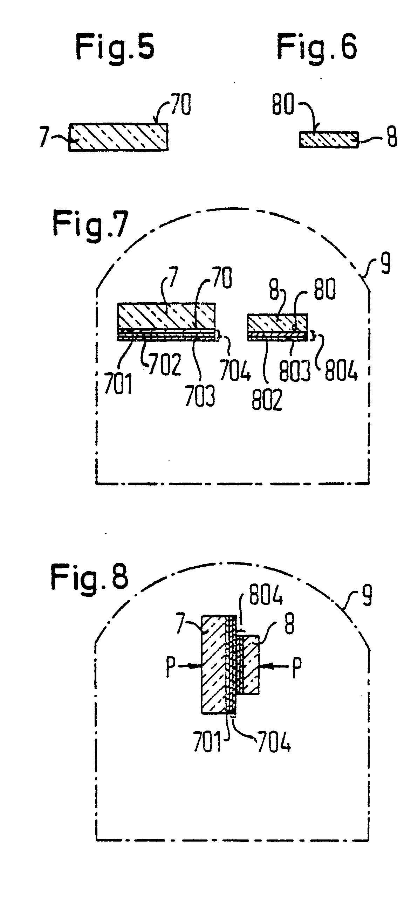

Im folgenden werden Ausführungsbeispiele der Erfindung an Hand der Zeichnung häher erläutert. Es zeigt Figur 1 bis 4 in vereinfachter schematischer Darstellung die verschiedenen Verfahrensstadien bei der Herstellung einer mittelbaren Verbindung zwischen zwei Teilen und Figur 5 bis Figur 9 verschiedene Verfahrensstadien bei der Herstellung einer akustischen Lichtablenkeinrichtung.

Figur 1 zeigt ein Teil 1, welches mit einem in Figur 2 dargestellten Teil 2 mittelbar verbunden werden soll, da eine unmittelbare Verbindung nicht möglich ist. Dieses Erfordernis einer mittelbaren Verbindung ergibt sich beispielsweise, wenn die Teile 1 und 2 aus nicht miteinander verschmelzbaren und nicht lötbaren Werkstoffen bestehen. Zur Herstellung dieser mittelbaren Verbindung werden die Verbindungsflächen 10 und 20 der zu verbindenden Teile 1 und 2 zunächst mittels bekannter Läpp- und Schleifverfahren eben und glatt gemacht, bis eine Ebenheit von weniger als 1 µm und eine Rauhtiefe von weniger als 0,1 µm erreicht ist. Anschliessend werden dieTeile 1 und 2 gemäss Figur 3 in einer Vakuumkammer 3 angeordnet, in welcher über eine Saugleitung 4 und eine Vakuumpumpe 5 ein Vakuum erzeugt wird. Daraufhin wird das in einem Schmelztiegel 6 enthaltene Metall erhitzt und auf die Verbindungsflächen 10 und 20 der Teile 1 und 2 aufgedampft, bis geschlossene Metallauflagen 101 bzw. 201 mit einer gleichmässigen Schichtstärke von mindestens 0,5 nm und höchstens 55 nm entstehen. Die Verdampfung der Metalle kann auch mit Hilfe eines Elektronenstrahls vorgenommen werden. Neben dem Aufdampfen können die Metallauflagen 101 und 201 auch durch Aufstäuben aufgebracht werden. Als Metallauflagen 101 und 102 sind beispielsweise 5 nm starke Titanschichten geeignet. Nach dem Bedampfen der Teile 1 und 2 werden diese gemäss Figur 4 ohne Zwischenbelüftung der Vakuumkammer 3 so zusammengebracht, dass sich die Metallauflagen 101 und 201 berühren. Dies erfolgt mit Hilfe einer in der Zeichnung nicht dargestellten Vorrichtung, welche über eine vakuumdichte Durchführung bedient werden kann. Sobald zwischen den Metallauflagen 101 und 201 eine innige Berührung hergestellt ist, verschweissen sie miteinander und führen somit zu einer mittelbaren Verbindung zwischen den Teilen 1 und 2. Nach dem Verschweissen wird dann die Vakuumkammer 3 belüftet, worauf die miteinander verbundenen Teile 1 und 2 entnommen werden können.

Figur 5 zeigt ein aus Bleimolybdat bestehendes akustooptisches Bauelement 7, welches zur Bildung einer akustischen Lichtablenkeinrichtung mit einem in Figur 6 dargestellten piezoelektrischen Kristall 8 verbunden werden soll. Zur Herstellung einer festen und dauerhaften Verbindung werden die Verbindungsflächen 70 und 80 der Teile 7 und 8 zunächst mittels bekannter Läpp- und Schleifverfahren auf eine Ebenheit von 1 μm, vorzugsweise 2 bis 3 Newtonringen gebracht. Nach einer sorgfältigen Reinigung der Verbindungsflächen 70 und 80 werden die Teile 7 und 8 gemäss Figur 7 in einer durch die strichpunktierte Linie 9 angedeuteten Vakuumkammer angeordnet. Innerhalb der Vakuumkammer 9 wird dann zunächst auf die Verbindungsfläche 70 des Teiles 7 eine ca. 75 nm starke Schicht 701 eines bleifreien Glases aufgedampft oder aufgestäubt. Diese Schicht 701 wirkt als Diffusionssperre und verhindert, dass das im Teil 7 enthaltene Blei in die spätere Verbindungszone diffundiert und eine Verbindung erschwert oder verhindert. Wenn das Teil 8 aus einem bleihaltigen piezokeramischen Werkstoff, wie Blei-Zirkon-Titanat besteht, so wird auf seine Verbindungsfläche 80 eine der Schicht 701 entsprechende Schicht eines bleifreien Glases aufgebracht.

Nach dem Aufbringen der Schicht 701 werden auf die Teile 7 und 8 gleichzeitig jeweils ca. 2 nm starke, aus Titan bestehende Haftschichten 702 bzw. 802 aufgedampft oder aufgestäubt. Danach werden auf diese Schichten gleichzeitig jeweils ca. 10 nm starke aus Gold bestehende Verbindungsflächen 703 bzw. 803 aufgebracht. Auf diese Weise erhält das Teil 7 eine zweischichtige Metallauflage 704 und das Teil 8 eine zweischichtige Metallauflage 804.

Nach dem Aufbringen der Metallauflagen 704 und 804 werden gemäss Figur 8 die Teile 8 und 7 innerhalb der Vakuumkammer 9 ohne vorhergehende Zwischenbelüftung und bei Raumtemperatur so zusammengebracht, dass sich die freien Oberflächen der Verbindungsschichten 703 und 803 berühren. Zur Intensivierung dieser Berührung und zum Ausgleich geringer Unebenheiten wird auf die Teile 7 und 8 ein in der Grössenordnung von ca. 5 N/cm² liegender Druck P ausgeübt. Sobald sich die Verbindungsschichten 703 und 803 berühren, verschwiessen sie flächig miteinander, so dass sich eine unlösbare und mittelbare Verbindung der Teile 7 und 8 ergibt. Zur Fertigstellung der akustischen Lichtablenkeinrichtung brauchen dann nur noch in bekannter Weise die für eine Kontaktierung erforderlichen Elektroden durch weiteres Aufdampfen oder Aufstäuben von Metall hergestellt zu werden.

Das erfindungsgemässe Verfahren eignet sich vorzüglich für die Herstellung von akustooptischen Bauelementen, da die äusserst dünnen, für die mittelbare Verbindung erforderlichen Metallauflagen den Schall nicht absorbieren. Es können jedoch auch in anderen Fällen, in denen eine unmittelbare Verbindung nicht möglich ist, mit Hilfe des erfindungsgemässen Verfahrens vakuum- und druckdichte mittelbare Verbindungen hergestellt werden. So können beispielsweise Fenster aus Quarzglas, Filtergläser oder Kristalle an Glas-Keramik- oder Metallflächen vakuumdicht befestigt werden, oder in Druckmessgeräten mittelbare Verbindungen von Membranen und dem Gehäuse oder dem Messkörper hergestellt werden. Mit dem erfindungsgemässen Verfahren bei Raumtemperatur hergestellte Verbindungen zwischen Teilen mit unterschiedlichen Wärmeausdehnungskoeffizienten zeichnen sich hierbei durch einen bei Raumtemperatur spannungsfreien Zustand aus.

## Patentansprüche

1. Verfahren zum mittelbaren Verbinden zweier Teile durch Verschweissung zweier Metallauflagen, bei welchem die Metallauflagen im Vakuum auf die Verbindungsflächen aufgebracht und im Vakuum praktisch drucklos miteinander verschweisst werden, dadurch gekennzeichnet, dass die Verbindungsflächen (10, 20, 70, 80) der zu verbindenden Teile (1, 2, 7, 8) auf eine Ebenheit von weniger als 1 μm und eine Rauhtiefe von weniger als 0,1 μm bearbeitet werden und zweischichtige, aus einer unteren Haftschicht (702, 802) und einer oberen Verbindungsschicht (703, 803) bestehende Metallauflagen (704, 804) in Schichtstärken zwischen 0,5 nm und 55 nm aufgebracht werden.

2. Verfahren nach Anspruch 1, dadurch gekennzeichnet, dass für die Haftschicht (702, 802) Titan oder Chrom in einer Schichtdicke zwischen 0,5 nm und 5 nm verwendet wird und dass für die Verbindungsschicht (703, 803) eines der Metalle aus der Gruppe Gold, Silber, Platin, Kupfer, Aluminium und Indium in einer Schichtstärke zwischen 5 nm und 50 nm aufgebracht wird.

3. Verfahren nach den Ansprüchen 1 und 2, dadurch gekennzeichnet, dass die zu verbindenden Teile (7, 8) beim Verschweissen der Metallauflagen (704, 804) mit einem Druck (P) bis zu 10 N/cm² zusammengepresst werden.

4. Verfahren nach einem der vorhergehenden Ansprüche, dadurch gekennzeichnet, dass das Verschweissen der Metallauflagen (101, 102, 704, 804) bei Raumtemperatur vorgenommen wird.

## Revendications

1. Procédé pour relier indirectement deux pièces par soudure de deux revêtements métalliques, suivant lequel on dépose les revêtements métalliques sous vide sur les surfaces à relier et on les soude l'un à l'autre, pratiquement sans exercer de pression, caractérisé en ce qu'il consiste à usiner les surfaces (10, 20, 70, 80) de liaison des pièces (1, 2, 7, 8) à relier à une planéité inférieure à 1 micron et à une profondeur de rugosité inférieure à 0,1 micron et à déposer, en des épaisseurs de couche comprises entre 0,5 nm et 55 nm, des revêtements (704, 804) métalliques à deux couches constitués d'une couche (702, 802) inférieure d'adhérence et d'une couche (703, 803) supérieure de liaison.

2. Procédé suivant la revendication 1, caractérisé en ce qu'il consiste à utiliser pour la couche (702, 802) d'adhérence du titane ou du chrome, en une épaisseur de couche comprise entre 0,5 nm et 5 nm, et à déposer pour la couche (703, 803) de liaison l'un des métaux du groupe or, argent, platine, aluminium et indium, en une épaisseur de couche comprise entre 5 nm et 50 nm.

3. Procédé suivant les revendications 1 et 2, caractérisé en ce qu'il consiste à presser ensemble les pièces (7, 8) à relier en y appliquant une pression (P) allant jusqu'à 10 N/cm² lors de la soudure des revêtements (704, 804) métalliques.

4. Procédé suivant l'une des revendications précédentes, caractérisé en ce qu'il consiste à effectuer la soudure des revêtements (101, 102, 704, 804) métalliques à la température ambiante.

**Claims**

1. A process for indirectly joining two parts by welding together two metal coatings thereon, wherein the metal coatings are applied in vacuum to the surface to be joined and are welded to one another substantially in the absence of pressure, characterised in that the joining surfaces (10, 20, 70, 80) of the parts (1, 2, 7, 8) to be joined, are treated to produce a flatness of less than 1 μm and a peak-to-velley height of less than 0.1 μm, and double-layer metal coatings (704, 804) which consist of a lower adhesive layer (702, 802) and an upper connecting layer (703, 803) are applied in layer thicknesses of between 0.5 nm and 55 nm.

2. A process as claimed in Claim 1, characterised in that titanium or chromium is used as the adhesive layer (702, 802) in a layer thickness of between 0.5 nm and 5 nm, and one of the metals of the group gold, silver, platinum, copper, aluminium and indium is applied in a layer thickness between 5 nm and 50 nm to form the connecting layer (703, 803).

3. A process as claimed in Claim 1 and 2, characterised in that the parts (7, 8) which are to be joined are pressed together with a pressure (P) of up to 10 N/cm² during welding of the metal coatings.

4. A process as claimed in one of the preceding Claims, characterised in that the metal coatings (101, 102, 704, 804) are welded together at room temperature.

Fig.1  Fig.2

Fig.3

Fig.4

# Fig.5

70

7

# Fig.6

80

8

# Fig.7

9

7 70 8 80

701 702 704 803 804
703 802

# Fig.8

804 9

7 8

P → ← P

701 704